# EUROPEAN PATENT SPECIFICATION

(11) **EP 4 407 458 B1**
(45) Date of publication and mention of the grant of the patent: **19.08.2026**
(21) Application number: 23153937.0
(22) Date of filing: 30.01.2023
(51) Int. Cl.: G06F 9/54, H04L 61/3015, G06F 9/50, H04L 61/30

(54) **METHOD FOR USING A TELECOMMUNICATIONS NETWORK, USER EQUIPMENT, SYSTEM OR TELECOMMUNICATIONS NETWORK, PROGRAM AND COMPUTER-READABLE MEDIUM**
VERFAHREN ZUR VERWENDUNG EINES TELEKOMMUNIKATIONSNETZES, BENUTZERGERÄT, SYSTEM ODER TELEKOMMUNIKATIONSNETZ, PROGRAMM UND COMPUTERLESBARES MEDIUM
PROCÉDÉ D'UTILISATION D'UN RÉSEAU DE TÉLÉCOMMUNICATIONS, ÉQUIPEMENT UTILISATEUR, SYSTÈME OU RÉSEAU DE TÉLÉCOMMUNICATIONS, PROGRAMME ET SUPPORT LISIBLE PAR ORDINATEUR

(43) Date of publication of application: 31.07.2024
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- WO-A1-2022/125296
- US-A1- 2021 165 731
- US-B1- 10 250 677
- BO HAN ET AL: "Network Function Virtualization: Challenges and Opportunities for Innovations", IEEE COMMUNICATIONS MAGAZINE, 1 February 2015 (2015-02-01), pages 90 - 97, XP055336513, Retrieved from the Internet <URL:http://ieeexplore.ieee.org/ielx7/35/7045380/07045396.pdf?tp=&arnumber=7045396&isnumber=7045380> [retrieved on 20170118], DOI: 10.1109/MCOM.2015.7045396
- GODFREY BRIGHTEN ET AL: "KLEIN : A Minimally Disruptive Design for an Elastic Cellular Core", PROCEEDINGS OF THE SYMPOSIUM ON SDN RESEARCH, SOSR '16, 14 March 2016 (2016-03-14), New York, New York, USA, pages 1 - 12, XP093240795, ISBN: 978-1-4503-4211-7, Retrieved from the Internet <URL:https://dl.acm.org/doi/pdf/10.1145/2890955.2890961> [retrieved on 20250113]
- ZAFAR AYYUB QAZI ET AL: "A High Performance Packet Core for Next Generation Cellular Networks", PROCEEDINGS OF THE CONFERENCE OF THE ACM SPECIAL INTEREST GROUP ON DATA COMMUNICATION , SIGCOMM '17, ACM PRESS, NEW YORK, NEW YORK, USA, 7 August 2017 (2017-08-07), pages 348 - 361, XP058370911, ISBN: 978-1-4503-4653-5, DOI: 10.1145/3098822.3098848

## Description

### BACKGROUND

The present disclosure relates a method for using a telecommunications network, wherein either the telecommunications network as a whole, or at least a specified part of the telecommunications network is or corresponds to an entity that is realized or implemented according to both a first instance of that entity and at least according to a second instance of that entity.

Additionally, the present disclosure relates to a system or telecommunications network, wherein either the telecommunications network as a whole, or at least a specified part of the telecommunications network is or corresponds to an entity that is realized or implemented according to both a first instance of that entity and at least according to a second instance of that entity.

Furthermore, the present disclosure relates to a program and to a computer-readable medium for using a telecommunications network according to the inventive method.

In conventionally known telecommunications networks, the typical setup, especially of a mobile communication network, is based on the premise that a user equipment obtains network connectivity to a data network (DN) - e.g. the internet - via a core network (CN) and a (radio) access network (AN or RAN).

Furthermore, the concept of 'digital twins' has been applied to telecommunications networks, and especially to mobile communication networks. The purpose of network digital twins is to have a full or partial copy of the telecommunications network, especially a mobile communication network and/or network functions comprising a mobile communication network, with the purpose of trying alternative parameter sets, feature or to simulate the behavior in certain cases (e.g., a cyber-attack) without impacting the real network. Hence, it is thereby possible to have (typically besides the 'real' or physical telecommunications network or mobile communication network) at least one copy, but potentially also different copies, of such a telecommunications network. Another application of such digital (or virtualized) copies of networks is the deployment in virtual (e.g. virtualized or fully-virtualized) or synthetic environments, sometimes also called the metaverse. For example, such a virtual reality-based deployment (of a telecommunications network) could comprise not only an industrial plant but also a communications network as part of the emulated environment.

According to presently known telecommunications networks or digital copies thereof, such copies are independent, i.e. there is basically no need to identify them as such or make other elements aware (i.e. differentiate, e.g., the real or physical implementation from the digital copy of the same telecommunications network). The same applies to the virtual world (or to purely digital or virtualized telecommunications networks. It is referred to the following publications of the prior art:
-- Godfrey Brighten ET AL: "KLEIN : A Minimally Disruptive Design for an Elastic Cellular Core", Proceedings of the Symposium on SDN Research, SOSR '16, 14 March 2016 (2016-03-14), pages 1-12, New York, New York, USA ISBN: 978-1-4503-4211-7, retrieved from: https://dl.acm.org/doi/pdf/10.1145/2890955.2890961, and
-- ZAFAR AYYUB QAZI ET AL: High Performance Packet Core for Next Generation Cellular Networks", PROCEEDINGS OF THE CONFERENCE OF THE ACM SPECIAL INTEREST GROUP ON DATA COMMUNICATION, SIGCOMM '17, ACM PRESS, NEW YORK, NEW YORK, USA, 7 August 2017 (2017-08-07), pages 348-361, DOI: 10.1145/3098822.3098848 ISBN: 978-1-4503-4653-5.

However, in such a situation of different copies - or digital twins -, of a telecommunications network or a mobile communication network, such copies of such a telecommunications network or of such a mobile communication network cannot be interconnected, i.e. be connected with each other such that messages between a telecommunications network and a digital twin component and/or a component deployed in a virtual environment can be exchanged and/or routed between the components.

### SUMMARY

An object of the present invention is to provide a technically simple, effective and cost effective solution for using a telecommunications network, wherein either the telecommunications network as a whole, or at least a specified part of the telecommunications network is or corresponds to an entity that is realized or implemented according to both a first instance of that entity and at least according to a second instance of that entity, wherein the entity has or is assigned to an entity identifier information that is equal for both the first and second instance of the entity (i.e. the first instance and the at least second instance of the entity is related to, or uses, the same entity identifier information) - and wherein especially the use of that common entity identifier information precludes an immediate interconnection of both instances and/or routing and/or exchange of messages between both instances. A further object of the present invention is to provide a corresponding system comprising a telecommunications network, and a corresponding program and computer-readable medium.

The present invention is defined in the independent claims.

According to the present disclosure, it is advantageously possible to enable interconnection of telecommunications network duplicates (or network copies) and interconnection of network component duplicates (or copies of such components) within telecommunication networks. Hence, it is advantageously possible, according to the present disclosure, to allow digital copies of telecommunications networks or of network components to work together, i.e. to intercommunicate, with elements within such networks or with other networks. Just for the sake of examples or exemplary applications, the following use cases are provided where an interconnection of telecommunications networks or of network elements between different digital copies of the same network or network component may be desirable or useful:
-- multiple representations (or digital copies) of only some elements (of a telecommunications network); in this case, different copies (with different characteristics) of the same network element (or entity) are used - and not a full (or the whole) network is virtualized which would require an increased amount of resources;
-- a telecommunications network is legally required to always use (with regard to entities or components outside of that telecommunications network) a specific network identifier (e.g. tied to regulatory/legal requirements such as emergency services and/or legal interception, LI) but such a telecommunications network should also be used, e.g. besides in the real or physical world, as a digital twin and/or be present in a virtual environment such as a digital (only) world;
-- a movement of same user equipment among several representations of the same telecommunications network or network component, allowing states to be transferred between network (component) copies, e.g. an operator network is present both in the real world in a country as well as in a virtual environment such as a virtual world representation and a context transfer (e.g. activated protocol data units, PDU, sessions; user equipment context information; subscriber information) from a given user equipment can be transferred between different instances (e.g. copies) of a network function instance located in a physical network and a virtual environment;
-- to enable an interconnection between subscribers with a "metaverse subscription" and subscribers with a physical SIM card, both within the same operator and between different operators;
-- use of different location/time formats depending of the network instance (or entity instance): it is possible that in virtual environments different location coordinate systems or frame of references are used to represent a given location than the coordinates-based system(s) use in the physical world; without knowing to what instance (location) a given request/response relates to, it may not be possible to correctly interpret location data; similarly, different time standards or frame of references can be used between a network in the physical world and on a virtual environment;
-- applying of different charging (e.g. by including additional information in charging records) for usage based on whether the usage is generated by a digital twin copy, a copy located in a specific metaverse or the physical network;
-- routing of requests between different cloud providers hosting different digital twins or realizations of a network or of network components (i.e. entities) of a given operator, e.g. the operator of a given virtual environment or cloud infrastructure requires services to be hosted on their cloud infrastructure.

According to the present disclosure, a method is provided for using a telecommunications network, wherein an entity is realized or implemented according to both a first instance of that entity and at least according to a second instance of that entity, and wherein the entity has or is assigned to an entity identifier information, such same entity identifier information being used both by the first instance and by the at least second instance of the entity; such entity identifier information could also be referred to as a canonical entity identifier information, i.e. generally used to identify a specific (or considered) entity and to differentiate such entity from another entity (of, especially, the same or analogous kind). In such a situation, generating or using a digital twin (or virtualized instance) of the considered entity requires the digital twin (or virtualized instance) to also use the identical entity identifier information (otherwise it would be rather hard to consider the virtualized instance a true or actual digital twin of the 'original' (or to be duplicated) version (or instance) of the entity). This works fine in case that both versions (or instances) of the entity are - completely or almost completely - separated and especially in case that regarding any use of the canonical entity identifier information (that is proper to the addressed entity, and, hence, common to both versions or instances of the addressed entity), it is possible to clearly infer to which one of the versions or instances such use is referring. However, in case that the 'original' and the twin version (or instance) of the considered entity are to be somehow - directly or even indirectly - connected, or in case that the 'original' and the twin version (or instance) of the entity is (or might be) accessed or addressed by another entity (or further entity), using one and the same (canonical) entity identifier information in such accessing or addressing carries the risk of not being able to distinguish between both versions (or instances) of the entity, and, hence, causing confusion. In order to prevent such confusion, according to the present invention, an entity instance identifier information is used in addition to the (canonical) entity identifier information; hence, a first entity instance identifier information is assigned or associated to the first instance of the specific or considered entity, and a second entity instance identifier information (different from the first entity instance identifier information) is assigned or associated to the second instance of the specific or considered entity. Thereby, it is advantageously possible - by means of using either the first or the second entity instance identifier information - to selectively address or access either the first or the second instance of the specific or considered entity even though the same (i.e. identical) 'canonical' entity identifier information is used.

In conventionally known telecommunications networks, there is no such concept of "network duplicate identifier". As such, it is not necessary for, e.g., two user equipments residing within the same telecommunications network and wishing to communicate with each other to identify, or use, an entity instance identifier information (or a network instance identifier information).

Hence according to the present disclosure, in a situation that the further entity, e.g., needs access or wants to access or to address the first instance of the considered entity,
-- the further entity first transmits or directs a first message to, e.g., an intermediate network node (of either the telecommunications network or of the further telecommunications network), using at least the entity identifier information (i.e. the identifier information common to both the first and the second instance of the considered entity) to access or to address the first instance of the entity, wherein the first entity instance identifier information (of the first instance) is determined (by the intermediate network node) or has (previously) been determined (either by the intermediate network node and associated to the further entity, or, especially, by the further entity itself and also transmitted (besides the entity identifier information and as part of the first message) to the intermediate network node), and,
-- by means of a second message, and using the first entity instance identifier information, the first instance of the entity is accessed or addressed.
Of course, in the same manner (as the described access to the first instance of the considered entity is performed), in case that the second instance of this same entity should be accessed or addressed (instead of the first instance thereof) by the further entity, the second entity instance identifier information (of the second instance) is used instead of the first entity instance identifier information, either already as part of the first message, or - at least - as part of the second message, and to be determined, e.g., by the further entity or by the intermediate network node, if need be after consulting or requesting the respective information from, e.g., a repository element within the respective telecommunications network.
In an analogous manner - and as well more generically -, instead of only two instances of the considered entity, more than two instances are able to exist or might be considered. In this case, a different entity instance identifier information is assigned or associated to each one of the different instances of the entity. In case that the further entity needs or wants to access one specific instance of the plurality of such instances (i.e. of the first and the at least second instances) of the entity, the one specific (selected) instance has (of course) its specific entity instance identifier information out of the plurality of the pieces of entity instance identifier information (i.e. of the first and the at least second entity instance identifier information), and in order for the further entity accessing or addressing the entity or the one specific instance of the entity, the inventive method comprises the steps of:
-- in a first step, the further entity transmits or directs the first message to the intermediate network node of either the telecommunications network or of the further telecommunications network, using at least the entity identifier information to access or to address the specific instance of the entity, wherein the specific entity instance identifier information of the specific instance is or has been determined,
-- in a second step, by means of a second message, and using the specific entity instance identifier information, the specific instance of the entity is accessed or addressed.
The meaning of the wording "in order for the further entity accessing or addressing the entity or the one specific instance of the entity" aims to reflect that the further entity is not necessarily aware that there is the first and the at least second instance of the entity - i.e. from the perspective of the further entity only 'the entity' might exist (at least regarding specifically the first message considered at a certain point in time, i.e. for different first messages, having a different context, different instances of 'the entity' might be relevant).

According to the present disclosure, an entity is considered, and, regarding this entity, a plurality of instances is considered (a first instance and at least one second instance, but potentially also more than two instances). Regarding the question of what such an entity actually is or might be, such an entity might either be (or correspond to) a whole telecommunications network, e.g. a mobile communication network, but such an entity might, alternatively, also be (or correspond to) a specified part of a telecommunications network. For example, a user equipment is able to be regarded as such an entity; in such a situation, there would be a first instance of such a user equipment and, at least, a second instance of that (same) user equipment (i.e. identified by the common user equipment identifier information, shared among the first and (at least) second instance of the considered user equipment); hence, in the context of the present disclosure, in case that a considered user equipment is regarded as such an entity, the term entity instance identifier information would need to be understood as user equipment instance identifier information and the term entity identifier information would need to be understood as user equipment identifier information. Furthermore for example, an access network or a part thereof (e.g., a gNB or base station entity, a central unit or a distributed unit, or a cell ID) is able to be regarded as such an entity; in such a situation, there would be a first instance of such an access network or a part thereof and, at least, a second instance of that (same) access network or part thereof (i.e. identified by the common access network or gNB, etc. identifier information, shared among the first and (at least) second instance of the considered access network or part thereof); hence, in the context of the present disclosure, in case that a considered access network or base station entity or radio cell (having a cell ID) is regarded as such an entity, the term entity instance identifier information would need to be understood as, respectively, access network instance identifier information, base station entity (gNB) instance identifier information or radio cell instance identifier information, and the term entity identifier information would need to be understood as, respectively, access network identifier information, base station entity (gNB) identifier information or radio cell identifier information. Furthermore for example, a core network or a part thereof (e.g., a network function instance, which can be identified by a network function instance identifier, network function identifier information; a slice identifier, which can be identified by a single network slice selection information, S-NSSAI) is able to be regarded as such an entity; in such a situation, there would be a first instance of such a core network or a part thereof and, at least, a second instance of that (same) core network or part thereof (i.e. identified by the common core network identifier information or network function identifier information, etc., shared among the first and (at least) second instance of the considered core network or part thereof); hence, in the context of the present disclosure, in case that a considered core network or part thereof, especially a specific network function thereof is regarded as such an entity, the term entity instance identifier information would need to be understood as, respectively, core network instance identifier information or network function instance identifier information, and the term entity identifier information would need to be understood as, respectively, core network identifier information or network function identifier information, wherein, in turn, 'network function' would have to be replaced by the respective network function's designation, especially, in case of 5G networks, access and mobility management function, session management function, policy control function, charging function, user plane function, unified data management function or the like (resulting in speaking of, e.g., 'access and mobility management function instance identifier information' and 'access and mobility management function identifier information', and analogously for other kinds of network functions).
Hence, according to the present disclosure, an entity refers to an element (or network element) susceptible to be 'copied' (although each copy may use a different configuration or provide a different feature set) and then to exist in the form of different instances wherein at least one of those instances of the entity correspond to software-based copies; in case that the considered entity (to be 'copied') is a whole telecommunications network, to have a software-based copy, in such a case, applies to any element in the (copied) telecommunications network.

Hence, according to the present disclosure - and especially in case that the entity to be virtualized or duplicated corresponds to a telecommunications network or a part thereof -, the inventive method comprises adding a "network instance identifier" (NIID) to the duplicates of the network element(s) or entities. The NIID univocally identifies the given duplicate of the given network or network element. Thus, a globally unique identifier (such as, e.g., a globally unique network identifier, e.g. a PLMN ID) can thus be simultaneously deployed at multiple physical or virtual locations (or instances), whereas each duplicate can be univocally identified by means of the NIID or entity instance identifier information, thus adding an additional dimension to network identifiers, allowing networks or parts thereof to be duplicated. Whereas a slice identifier in a 5G network identifying a given network slice allows a network to be segmented in "sub-networks" within a given network (and its associated network identifier), a NIID can be applied to realize multiple instances of a given network identifier.

Especially the entity instance identifier information, or the NIID, is able to be applied to the following network elements in telecommunications networks, especially in mobile communication networks:
-- the user equipment:
   -- based on configuration, the user equipment might be able to signal (to) the network, e.g. at registration and/or via radio resource control and/or via non-access stratum, that it wishes to register to a given duplicate (or instance) of the network, identified with the NIID;
   -- reception of NIID information broadcast or signaled by the access network or core network, whereas the user equipment learns from this information which duplicate (or which instance) is visible;
-- the access network: broadcast of NIID information towards user equipment(s) and inclusion of NIID in inter-component communication
-- the core network: inclusion of NIID in inter-component communication, non-access stratum communication towards user equipment, in roaming communication.

According to the present disclosure it is advantageously possible and preferred that at least one of the instances of the entity is realized as a virtualized entity, especially as part of a virtual environment,
wherein especially the first instance of the entity is or corresponds to a physical implementation of the entity, and the second instance of the entity is or corresponds to a virtual implementation of the entity,
wherein especially the first instance of the entity is or corresponds to a virtual implementation of the entity, especially in a first virtual environment or cloud infrastructure, and the second instance of the entity is or corresponds to a virtual implementation of the entity, especially in a second virtual environment or cloud infrastructure, different from the first virtual environment or cloud infrastructure.

It is thereby advantageously possible to realize and implement the inventive method in a comparatively simple and efficient manner.

According to the present disclosure, it is furthermore advantageously possible and preferred that the first message, transmitted or directed, by the further entity, to the intermediate network node comprises both the entity identifier information and the specific entity instance identifier information of the specific instance,
wherein especially a respective entity instance identifier information is used by all network elements or network nodes of the telecommunications network.

It is thereby advantageously possible to realize and implement the inventive method in a comparatively simple and efficient manner by means of the further entity using - in (or as part of) the first message sent to the intermediate network node - the entity instance identifier information (in addition to the entity identifier information).

Furthermore, it is advantageously possible and preferred according to the present disclosure that the first message, transmitted or directed, by the further entity, to the intermediate network node comprises the entity identifier information and lacks the specific entity instance identifier information of the specific instance, wherein the intermediate network node determines the specific entity instance identifier information of the specific instance, especially by means of a repository entity or functionality,
wherein especially a respective entity instance identifier information is used by only a part of the network elements or network nodes of the telecommunications network.

It is thereby advantageously possible to efficiently realize and implement the inventive method in a comparatively simple and flexible manner by means of the further entity not requiring to provide - in, or as part of, the first message - already the entity instance identifier information; thus the further entity is able to transmit the first message (and, more generally, communicate with other network elements and especially with the intermediate network node) in a manner unchanged with respect to a situation where only the 'original' or 'physical' version of the considered entity exist, i.e. where the considered entity is not duplicated at all; this might especially be beneficial for testing purposes and/or for providing legacy functionality - e.g. regarding legacy radio access technologies.

Furthermore, it is advantageously possible and preferred according to the present disclosure that the entity - and, as a consequence, also the first instance of that entity and at least the second instance of that entity - is or corresponds to, or realizes the functionality of, at least one out of the following:
-- the telecommunications network as a whole, the entity identifier information being a network identifier information,
-- a core network of the telecommunications network or an entity or functionality of the core network of the telecommunications network, especially a core network component or a network function or service, especially an access and mobility management function, a session management function, a policy control function, charging function, a user plane function or a unified data management function, the entity identifier information being a network function identifier information,
-- an access network of the telecommunications network or an entity or functionality of the access network of the telecommunications network, especially a base station entity or a part thereof such as a centralized unit, distributed unit, radio unit,
-- a user equipment or a mobile device, or a part thereof, being connected to the telecommunications network or part of the telecommunications network,
wherein especially the telecommunications network comprises different functionalities, or parts, that are realized or implemented, respectively, as a first instance and as at least a second instance.

It is thereby advantageously possible to realize and implement the inventive method in a comparatively simple and efficient manner.

Furthermore, it is advantageously possible and preferred according to the present disclosure that the first entity instance identifier information and/or the at least second entity instance identifier information is or corresponds to one out of the following:
-- an indication of a number or of a Boolean value, true/false, especially whether the addressed instance corresponds to a physical instance, or to a virtual instance or a copy thereof,
-- as a specified identifier information such as fully qualified domain name-based, especially without the need to a central management,
-- as a centrally managed identifier within the telecommunications network, especially assigned by the telecommunications network and valid within the telecommunications network,
-- an identifier information related to the hosting location of the respective instance, especially indicating the virtual environment or cloud infrastructure, especially by means of a fully qualified domain name or a specified string.

It is thereby advantageously possible to realize and implement the inventive method in a comparatively simple and efficient manner.
As already said, especially in case that the entity to be virtualized or duplicated corresponds to a telecommunications network or a part thereof, the inventive method comprises (besides using the entity identifier information) adding the entity instance identifier information as a "network instance identifier (information)" (hereinafter also referred to by the term NIID) to the network element(s) or entities of the considered telecommunications network to be virtualized or duplicated. Each duplicate (or instance) of the telecommunications network or a network element thereof can be univocally identified by means of the NIID (i.e., with respect to the considered entity, the entity instance identifier information), thus adding an additional dimension especially to network identifiers, allowing networks or parts thereof to be duplicated.
Especially the proposed NIID identifier can be realized in the following forms:
-- a well-known (i.e. such that its structure, meaning and/or components are specified and/or known) identifier such as FQDN-based, which need not be centrally managed, e.g. if (the NIID carries the) value=0, this refers to the original instance, (NIID) values 1, ... N: this identifies a duplicate (instance) or duplicates;
-- a centrally managed identifier, e.g. specified by a regulator;
-- a locally-assigned identifier, assigned by the own network and valid within the network (similar to 1);
-- a reduced-complexity binary identifier, whereas it is only identified whether the network element is a duplicate or not (e.g. if value equal 0 the instance is the original, if the value is different that 0 the instance is a duplicate);
-- an identifier related to the hosting location (e.g., the provider of the virtualized environment), such that the specific network instance can be identified by a combination of the network identifier and provider (e.g., infrastructure, computing, cloud provider) identifier (e.g. a resolvable FQDN or a well-known string).

Furthermore, it is advantageously possible and preferred according to the present disclosure that - especially in case that the first instance of the entity is or corresponds to a physical implementation of the entity, and the second instance of the entity is or corresponds to a virtual implementation of the entity, especially in case that the first instance of the entity and the second instance of the entity use, for a given physical parameter, different frames of reference - a request from a requesting entity regarding a physical parameter, especially related to a location and/or to a time, results in the association of the requested physical parameter to a specific frame of reference of the virtual environment or cloud infrastructure of the second instance of the entity.

It is thereby advantageously possible to realize and implement an implementation of meaningfully retrieving parameters that are rather linked to the physical world, such as location and/or time, even in cases where such requests refer to elements that correspond to virtual environments (such as instances or user equipments).

Furthermore, the present invention relates to a system according to claim 5.

Additionally, the present invention relates to a program according to claim 6.

Additionally, the present invention relates to a computer-readable medium according to claim 7.

### BRIEF DESCRIPTION OF THE DRAWINGS

Figure 1 schematically illustrates a telecommunications network comprising an access network, a core network and a user equipment, wherein an entity of the telecommunications network (as a part of the telecommunications network) is implemented according to a first instance of that entity and according to a second instance of that entity.
Figure 2 schematically illustrates different examples of interconnections between networks or of instances of such networks.
Figures 3 to 5 schematically illustrate communication diagrams relating to the different examples of interconnections between networks or of instances of such networks according to Figure 2.
Figure 6 schematically illustrates an example of an interconnection between networks or between instances of such networks (or indirect or direct routing) using an intermediate exchange.
Figure 7 schematically illustrates a communication diagram relating to retrieving location information in case of virtualized telecommunications networks.

### DETAILED DESCRIPTION

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

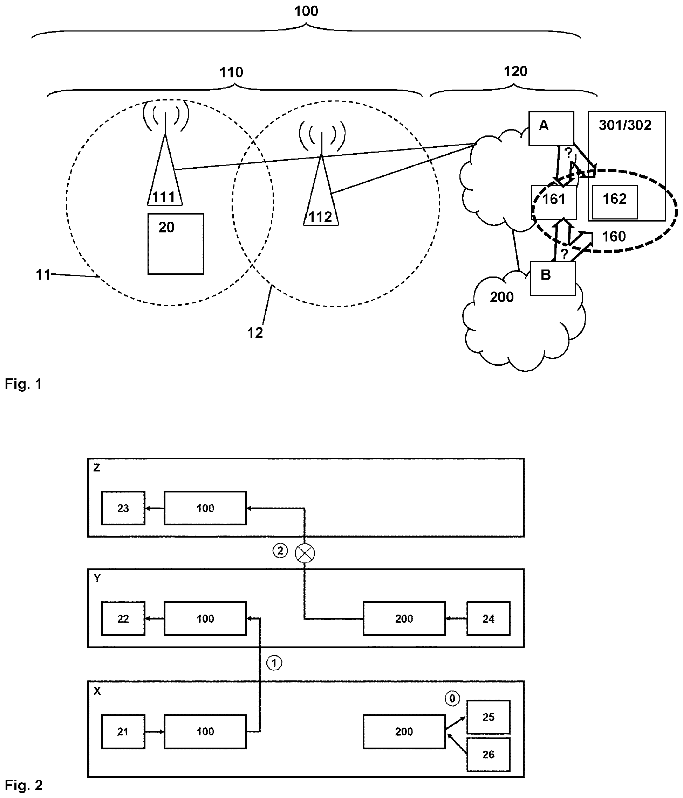

In Figure 1, a telecommunications network 100 comprising an access network 110, and a core network 120 is schematically shown. The telecommunications network 100, especially the core network 120, typically comprises a number of network nodes or network components, or also network functions or services. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the user equipment 20 is connected to the telecommunications network 100 via a radio interface to the first base station entity 111. The user equipment 20 is typically, but not necessarily, mobile i.e. able to move with respect to the (typically, but not necessarily, static) radio cells 11, 12 or corresponding base station entities 111, 112 of the access network 110. According to the present invention, the telecommunications network 100 is connected to a further telecommunications network 200, e.g. a home network of the user equipment 20, likewise comprising a core network that is not specifically represented in Figure 1.

The telecommunications network 100 as a whole is or corresponds to an entity 160 that is realized or implemented according to both a first instance 161 of that entity 160 and at least according to a second instance 162 of that entity 160. Especially (and exemplarily represented in Figure 1), the first instance 161 of the entity 160 is or corresponds to a physical (or 'real') implementation of the entity 160 (especially as an operatively used part of the telecommunications network 100 (i.e. interworking with or cooperating with real-world physical parts or entity of the user equipment 100), wherein even as an operatively used part of the telecommunications network 100, the respective 'physical' implementation might actually be realized as a virtualized entity or a virtual network function), and the second instance 162 of the entity 160 is or corresponds to a (completely) virtual implementation (or copy or duplication, e.g. used for testing, simulation or emergency purposes) of the entity 160, especially as part of a first virtual environment 301 (or first cloud infrastructure 301) and/or as part of a second virtual environment 302 (or second cloud infrastructure 302).

According to the present invention, the entity 160 has or is assigned to an entity identifier information (or 'canonical' entity identifier information), wherein the entity identifier information is used to identify the entity 160, irrespective of which instance 161, 162 is meant or addressed (and even irrespective of a knowledge of an addressing further entity about the existence of different instances 161, 162 of that entity 160). Hence, the entity identifier information is generally used to identify a specific (or considered) entity 160 and to differentiate such entity 160 from another entity (of, especially, the same or analogous kind - e.g. in a telecommunications network or mobile communication network comprising a first and a second access and mobility management function, regarding the first such access and mobility management function (as the entity 160) there could be a first instance 161 of that (first) access and mobility management function and a second instance 162 (as a copy or twin) of that (first) access and mobility management function). In such a situation, all instances 161, 162 of one and the same entity are required to also use the identical entity identifier information (otherwise it would be rather hard to consider the virtualized (or copied or twin) instance a true or actual digital twin of the 'original' (or to be duplicated) version (or instance) of the entity 160).
According to the present invention, in such a situation - e.g. as part of the telecommunications network 100 - the first and second entities 161, 162 of the entity 160 shall be allowed to somehow interact or be - directly or even indirectly - connected (or interconnected), or, at least, be able to be addressed by another entity (e.g. a further entity A (being part of the telecommunications network 100) or a further entity B (being part of the further telecommunications network 200) in which case the use of one and the same (canonical) entity identifier information only (for both instances 161, 162 of the entity 160) in such accessing or addressing is proposed to be complemented by an entity instance identifier information which is used in addition to the (canonical) entity identifier information. Hence, a first entity instance identifier information is assigned or associated to the first instance 161 of the specific or considered entity 160, and a second entity instance identifier information (different from the first entity instance identifier information) is assigned or associated to the second instance 162 of the specific or considered entity 160. Thereby, it is advantageously possible - by means of using either the first or the second entity instance identifier information - to selectively address or access either the first or the second instance 161, 162 of the specific or considered entity 160 even though the same (i.e. identical) 'canonical' entity identifier information is used. In case that the different instances 161, 162 of the entity 160 relate to different instances of a network, also the term network instance identifier information (NIID) is used in the context of the present disclosure Such a NIID is able to be used
-- by all network elements or only some (e.g. only where multi-instance connectivity needed); this is also applicable to a UE/virtual UE, NF, gNB, CU, DU, etc.;
-- as well as to route messages between copies of the network elements and between networks (e.g. roaming between multiple network copies of different networks).

In Figure 2, different examples of such interconnections between telecommunications networks 100, 200 or of instances 1, 2, ,3 of such telecommunications networks 100, 200 are schematically shown for the example of a first telecommunications network 100 (or a first operator of a telecommunications network) and a second telecommunications network 200 (or a second operator of a telecommunications network), and for a number of exemplarily shown user equipments, namely a first user equipment 21, a second user equipment 22, a third user equipment 23, a fourth user equipment 24, a fifth user equipment 25, and a sixth user equipment 26.
A first instance X, e.g., relates to a (or the) physical network; a second instance Y, e.g., relates to a first virtual environment (that might also be called a first metaverse), and a third instance Z, e.g., relates to a second virtual environment (that might also be called a second metaverse).
An instance or a virtual representation must obviously be hosted "somewhere". However, different virtual representations (such as the second instance Y and the third instance Z) may have different hosting requirements, e.g. to be hosted on a specific cloud provider, i.e. on different virtual environments.
In order to be able to specifically or selectively address the different instances X, Y, Z (in the example of Figure 2 exemplarily rather being on the network level, i.e. directed to the first and second telecommunications networks 100, 200) different pieces of instance identifier information (or network instance identifier information or NIID) are used.

In current telecommunications networks, no such concept of "network duplicate identifier" exists or is used. As such, it is not necessary for two user equipments (cf. the fifth and sixth user equipments 25, 26 shown in Figure 2) residing within the same network (in the example the further telecommunications network 200) - and especially within the same instance X of that network - and wishing to communicate with each other (e.g., the sixth user equipment 26 initiating a call to the fifth user equipment 25) to identify a network instance; this is represented, in Figure 2, by means of an encircled reference sign 0.

Another example shown in Figure 2, relates to an interconnection within an operator (or telecommunications network - in the exemplary situation shown in Figure 2, the first telecommunications network 100) having deployed a physical network (i.e. instance X), as well as connectivity services within a virtual environment (i.e. instance Y), each network (or network part) being served by network elements, i.e. some network elements of the first telecommunications network 100 are located in the physical network X and some network elements are located in the virtual environment Y. In order for the first user equipment 21 to initiate a call to the second user equipment 22, it is necessary for the network elements of the physical network (instance X) to route the corresponding request(s) to the network elements of the virtual environment (instance Y) (represented, in Figure 2, by means of an encircled reference sign 1).

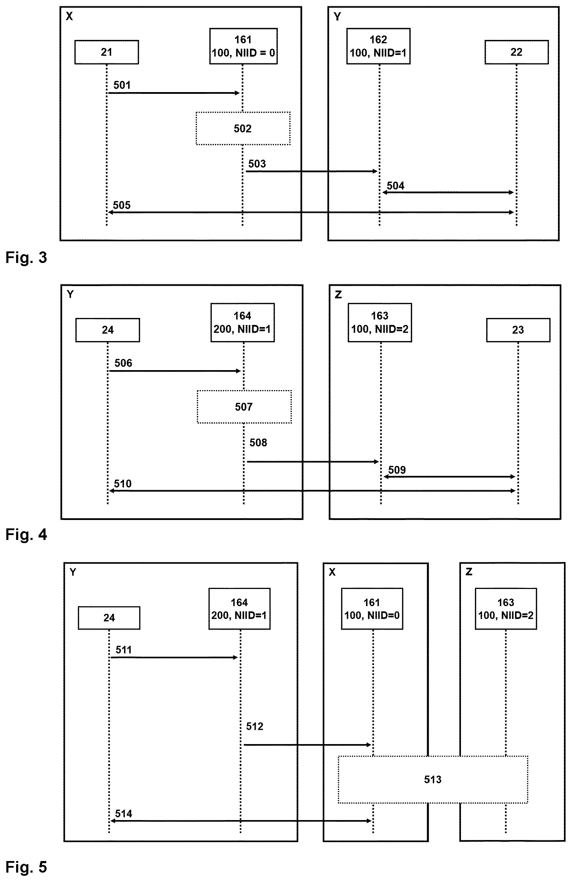

With respect to this example shown in Figure 2, Figure 3 schematically illustrates a communication diagram between, exemplarily, a physical network as an instance of the first telecommunications network 100, e.g. provided by a provider X, and a virtual environment realizing another instance of the first telecommunications network 100, e.g. provided by a provider Y - namely a call setup (as an example of such a communication flow) between the first and second user equipments 21, 22, whereas network elements serving the first instance 161 of the first telecommunications network 100 (having or using NIID=0) are hosted on a different physical or cloud infrastructure X as network elements serving the second instance 162 of the first telecommunications network 100 (having or using NIID=1) and being hosted on cloud infrastructure Y. In a first processing step 501, the first user equipment 21 transmits a call setup (request) - directed towards the second user equipment 22 - towards the first instance 161 of the first telecommunications network 100 (accessible by means of using the entity instance identifier information "NIID = 0"). Especially according to the present disclosure, the call setup request message corresponds to the first message that the further entity transmits or directs to the intermediate network node of the telecommunications network, i.e. the first user equipment 21 would correspond to the further entity and the first instance 161 of the first telecommunications network 100 would correspond to the intermediate network node. In a second processing step 502, the first instance 161 of the first telecommunications network 100 routes the request towards to the second instance of the first telecommunications network 100, provided by provider Y, and transmits (or forwards), in a third processing step 503, the request towards the second instance 162 of the first telecommunications network 100, accessible by means of using the entity instance identifier information "NIID = 1". In a fourth processing step 504, the requested call between the first and second user equipment 21, 22 is established (involving the second user equipment 22 and the second instance 162 of the first telecommunications network 100) and, in a fifth processing step 505, the communication link (or call) between the first and second user equipment 21, 22 is established, even though the second user equipment 22 is connected via the second instance 162 of the first telecommunications network 100.
Use cases for interconnection within an operator (i.e. between different instances 161, 162 of one and the same telecommunications network, e.g. the first telecommunications network 100), e.g., include:
-- mobility (e.g. handover) among user equipments between network copies (i.e. between instances 161, 162 (or between cloud infrastructures X, Y. In such cases, a transfer of user context must be possible between network elements. Also, it may be necessary to (re-)retrieve subscriber-related information, which is typically not duplicated (in a duplicated entity);
-- steering of subscribers to certain network element's copies based on subscriber information, device capabilities or signaled NIID by the device.

Another example shown in Figure 2, relates to the more complex case of an interconnection between operators (or between different telecommunications networks 100, 200): Two different networks, regardless of the NIID, need to communicate with each other. Similar to the aforementioned case, based on the combination of network identifier and NIID, one of the networks can route messages towards the other network, even if it is located in another virtual environment (instance Z). In the exemplary situation shown in Figure 2, the second telecommunications network 200 is deployed (as a first instance 164 of this second telecommunications network 200) in virtual environment Y (in contrast to, e.g., a second instance 165 (of this second telecommunications network 200) being or corresponding to the physical implementation X (or environment X) shown in Figure 2) and is able to be connected to the first telecommunications network 100 being deployed or implemented - besides, as its second instance 162, in virtual environment Y - also, as a (still) further instance 163 (of this first telecommunications network 100) in further virtual environment Z (or instance Z), each network being served by network elements, i.e. the network elements of the second telecommunications network 200 are located in virtual environment or instance Y and the network elements of the first telecommunications network 100 are located in the further virtual environment Z. In order for the fourth user equipment 24 to initiate a call to the third user equipment 23 (as exemplarily shown in Figure 2), it is necessary for the network elements of instance Y (i.e. the respective first instance 161 of the second telecommunications network 200) to route the corresponding request(s) to the further instance 163 of the first telecommunications network 100 hosted by the further virtual environment Z (represented, in Figure 2, by means of an encircled reference sign 2), and an IPX service is exemplarily being used to interconnect these different instances of the two telecommunications networks 100, 200. Although not shown in Figure 2, an IPX can also exemplarily be used for the network elements of the physical network (instance X) to route the corresponding request(s) to the network elements of the virtual environment (instance Y) and/or for the network elements of the virtual environment (instance Y) of the second telecommunications network 200 to route the corresponding request(s) to the network elements of the virtual environment (instance Y) of the first telecommunications network 100.

With respect to this example shown in Figure 2, Figure 4 schematically illustrates a communication diagram between, exemplarily, the virtual environment Y implementing an instance of the second telecommunications network 200 (e.g. provided by a provider Y), and the further virtual environment Z (or second virtual environment Z) implementing a further instance of the first telecommunications network 100 (e.g. provided by a provider Z) - again exemplarily showing a call setup (as an example of such a communication flow) between the fourth and third user equipments 24, 23, whereas network elements serving the first instance 164 of the second telecommunications network 200 (having or using NIID=1) are hosted on a different physical or cloud infrastructure Y as network elements serving the further instance 163 of the first telecommunications network 100 (having or using NIID=2) and being hosted on further cloud infrastructure Z. In a first processing step 506, the fourth user equipment 24 transmits a call setup (request) - directed towards the third user equipment 23 - towards the first instance 164 of the second telecommunications network 200 (accessible by means of using the entity instance identifier information "NIID = 1"). Especially according to the present disclosure, the call setup request message corresponds to the first message that the further entity transmits or directs to the intermediate network node of either the telecommunications network or of the further telecommunications network (in the first step of the inventive method), i.e. the fourth user equipment 24 would correspond to the further entity and the further instance 163 of the first telecommunications network 100 would correspond to the intermediate network node. In a second processing step 507, the first instance 164 of the second telecommunications network 200 routes the request towards to the further instance 163 of the first telecommunications network 100, provided by provider Z, and transmits (or forwards), in a third processing step 508, the request towards the further instance 163 of the first telecommunications network 100, accessible by means of using the entity instance identifier information "NIID = 2". In a fourth processing step 509, the requested call between the fourth and third user equipment 24, 23 is established (involving the third user equipment 23 and the further instance 163 of the first telecommunications network 100) and, in a fifth processing step 510, the communication link (or call) between the fourth and third user equipment 24, 23 is established, even though the third user equipment 23 is connected via the further instance 163 of the first telecommunications network 100.

A mixed-case between the aforementioned scenarios represented, in Figure 2, by means of the encircled reference signs 1 and 2 is shown in Figure 5: Interconnectivity between a duplicate network (or instance) 164 of the second telecommunications network 200 and a further duplicate (or further instance) 163 of the first telecommunications network 100 is realized via the normal message routing based only on the network identifier (e.g. PLMN ID). It is then the receiving network (i.e. the telecommunications network receiving the request) which transparently (to the second telecommunications network 200) routes the messages towards the correct network instance without explicit knowledge needed by the second telecommunications network 200. While simpler (from the perspective of the second telecommunications network 200), this approach has the drawback of being less resource-efficient as traffic needs to perform an extra hop before reaching its destination. This is exemplarily shown in Figure 5 which, again, illustrates a communication diagram between, exemplarily, the virtual environment Y implementing an instance 164 of the second telecommunications network 200 (e.g. provided by a provider Y), and the first telecommunications network 100, wherein the first instance 161 of the first telecommunications network 100 is implemented as the physical network (environment X), and wherein the further instance 163 of the first telecommunications network 100 is implemented in further virtual environment Z (e.g. provided by a provider Z). Again, Figure 5 exemplarily shows a call setup process or flow (as an example of such a communication flow) involving the fourth user equipment 24 (and a user equipment connected with the first telecommunications network 100 (such as the third user equipment 23). In a first processing step 511, the fourth user equipment 24 transmits a call setup (request) - e.g. directed towards the third user equipment 23 - towards the first instance 164 of the second telecommunications network 200 (accessible by means of using the entity instance identifier information "NIID = 1"). In a second processing step 512, the request is routed towards the first telecommunications network 100, using the network identifier information of the first telecommunications network 100. Especially according to the present disclosure, either the call setup request message (of the fourth user equipment 24 and in processing step 511) or the routing of this request towards the first telecommunications network 100 corresponds to the first message that the further entity transmits or directs to the intermediate network node of either the telecommunications network or of the further telecommunications network (in the first step of the inventive method), i.e. either the fourth user equipment 24 or the first instance 164 of the second telecommunications network 200 would correspond to the further entity and either the first instance 164 of the second telecommunications network 200 or the first instance 161 of the first telecommunications network 100 would correspond to the intermediate network node. In a third processing step 513, the first telecommunications network 100 transparently realizes connectivity with NIID=2 without explicit knowledge in the second telecommunications network 200 how to route the request towards the correct instance of the first telecommunications network 100, i.e. the communication of the second telecommunications network 200 is as though it communicated with the first instance 161 of the first telecommunications network 100. In a fourth processing step 514, the communication link (or call) of the fourth user equipment 24 (especially between the fourth and third user equipment 24, 23) is established.

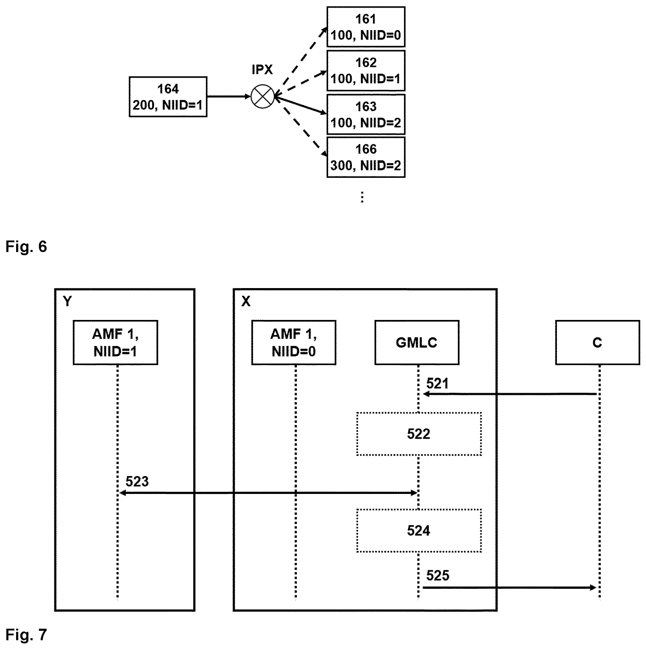

In Figure 6, an example of an interconnection between different telecommunications networks or between instances of such networks (or indirect or direct routing) using an intermediate exchange IPX is schematically shown. According to the present disclosure, it is advantageously possible to add NIID-awareness to an IPX (or similar) interconnect between telecommunications networks, thus a direct interconnect can be realized, with the IPX overtaking the task of directly routing traffic to the correct network identifier/network instance tuple (i.e. entity identifier information and entity instance identifier information tuple)..

According to the present disclosure, especially the following use cases for interconnection within an operator are possible and preferred:
-- mobility between operators (e.g. inter-network handover);
-- roaming and providing connectivity to users from other networks.

An aspect not related to the invention as claimed is related to the use of location services between network instances.
One different application of the NIID or the entity instance identifier information is as meta-information when different physical frameworks apply to different network instances. As an example, a network in a specific virtual environment or cloud infrastructure may represent location using a certain frame of references (that might be, especially, different from the common frame of reference, especially a certain geographical location and/or a certain point in time). While location in the physical world may be represented in a coordinate system such as GCS, a given virtual representation may be divided in areas, tessellated in hexagons and then a given coordinate within such a measure be provided.
There may be as many different frames of references as there are virtual representations or virtual environments; hence, it is necessary to provide location information in a way that is meaningful for the requesting entity. This can be of special importance in the case of providing emergency services and/or legal interception, LI.

In currently known telecommunications networks, there is typically no alternative meaning for physical pieces of information such as "location" or "time". As such, when a third party requests location information from a given network device (e.g. a network node of the telecommunications network 100, such as an access and mobility management function, the request (regarding, e.g., the location of a specific user equipment) is typically received by a gateway mobile location center which determines, e.g. on which access and mobility management function (of the telecommunications network) the specific user equipment is located, retrieves the corresponding information from the respective access and mobility management function, and provides a corresponding answer to the third party.

In the case where multiple virtual environments are used, it is necessary to provide more information. This is schematically shown in Figure 7 which illustrates a communication diagram relating to a third party C retrieving location information, e.g. from a network node of a telecommunications network, wherein such telecommunications network is realized as a virtualized telecommunications networks, namely comprising at least a first instance X and a second instance Y. While the third party C may know that the device/user (or user equipment) in question (e.g. whose location is requested) belong to a given operator (i.e. the telecommunications network), it may not know to which instance (i.e. which NIID) the user equipment belongs to. All that is known may be that the user equipment uses a given operator. To that effect, the operator would not need multiple network elements to receive location requests, but just one for the whole operator. In the case of 5G networks, that network node is typically called gateway mobile location centre, GMLC. In a first processing step 521, the third party C transmits a request location (for, or regarding, the considered user equipment) to the gateway mobile location centre. In a second processing step, 522, the gateway mobile location centre GMLC determines that the considered user equipment is located at or related to a specific network node, in the exemplary situation represented in Figure 7, an access and mobility management function AMF (e.g. the first access and mobility management function AMF1 of the telecommunications network). Moreover, the gateway mobile location centre also determines which instance of the AMF1 is responsible for the considered user equipment (in the example, this is the AMF1 of the second instance (NIID=1) rather than the AMF1 of the first instance (NIID=0). In a third processing step 523, the location information is retrieved from the second instance of AMF1 (NIID=1), located or implemented in virtual environment Y. In a fourth processing step 524, the gateway mobile location centre receives the location information according to a location information format specific to virtual environment Y, and in a fifth processing step 525, the location of the considered user equipment is transmitted to the third party C as the location (information) of, or related with the considered user equipment, and involving location metadata and/or relating to a frame of reference specific to the virtual environment Y.
Hence, for the third party C, the information related to the location of the user equipment expressed in the frame of reference used in the network instance may be of no value. As such, it is of value that for physical measures, the network provides additional metadata, such as, e.g.:
-- the NIID;
-- information related to the provider that defined the physical measure (e.g. the enterprise providing the virtual environment, frame of reference used);
-- an endpoint where additional information can be provided e.g., a translator function that can translate the given information into, e.g. an IP address of the user, country of origin, address;
-- alternatively, the second processing step could be provided by the network itself, with the translation being provided transparently to the 3rd party.

## Claims

1. Method for using a telecommunications network (100), wherein the telecommunications network (100) as a whole is an entity (160) that is realized or implemented according to both a first instance (161) of that entity (160) and at least according to a second instance (162) of that entity (160), wherein the entity (160) is susceptible to be copied and then to exist in the form of the first instance (161) and the at least second instance (162), wherein the at least second instance (162) corresponds to a software-based copy, wherein the copy is able to use a different configuration or provide a different feature set, wherein having a software-based copy applies to any element of the entity (160), wherein the entity (160) has or is assigned to an entity identifier information (150), wherein the entity identifier information (150) is a network identifier information,
wherein the first instance (161) and the at least second instance (162) of the entity (160) uses the same entity identifier information (150),
wherein a first entity instance identifier information (171) is assigned or associated to the first instance (161) of the entity (160), and wherein a second entity instance identifier information (172) is assigned or associated to the second instance (162) of the entity (160),
wherein the telecommunications network (100) is connected to a at least one further entity, said further entity being a user equipment, wherein the at least one further entity accesses one specific instance (160') of the plurality of the first and the at least second instances (161, 162) of the entity (160), the one specific instance (160') having a specific entity instance identifier information (170') out of the plurality of the first and the at least second entity instance identifier information,
wherein, in order for the further entity accessing or addressing the one specific instance (160') of the entity (160), the method comprises the following steps:
-- in a first step, the further entity transmits or directs a first message to an intermediate network node of the telecommunications network (100), using at least the entity identifier information (150) to access or to address the specific instance (160') of the entity (160), wherein the specific entity instance identifier information (170') of the specific instance (160') is or has been determined, wherein the first message, transmitted or directed, by the further entity, to the intermediate network node comprises both the entity identifier information (150) and the specific entity instance identifier information (170') of the specific instance (160'),
-- in a second step, by means of a second message, and using the specific entity instance identifier information (170'), the specific instance (160') of the entity (160) is accessed or addressed.

2. Method according to claim 1, wherein at least one of the instances (161, 162) of the entity (160) is realized as a virtualized entity (160),
wherein the first instance (161) of the entity (160) is a physical implementation of the entity (160), and the second instance (162) of the entity (160) is a virtual implementation of the entity (160),
or
wherein the first instance (161) of the entity (160) is a virtual implementation of the entity (160), especially in a first virtual environment (301) or cloud infrastructure, and the second instance (162) of the entity (160) is a virtual implementation of the entity (160), especially in a second virtual environment (302) or cloud infrastructure, different from the first virtual environment (301) or cloud infrastructure.

3. Method according to one of the preceding claims, wherein the first entity instance identifier information (171) and/or the at least second entity instance identifier information (172) is one out of the following:
-- an indication of a number or of a Boolean value, true/false, especially whether the addressed instance corresponds to a physical instance, or to a virtual instance or a copy thereof,
-- as a specified identifier information such as fully qualified domain name-based,
-- as a centrally managed identifier within the telecommunications network (100),
-- an identifier information related to the hosting location of the respective instance, especially by means of a fully qualified domain name or a specified string.

4. System comprising a telecommunications network (100) and at least one further entity, wherein the telecommunications network (100) as a whole is an entity (160) that is realized or implemented according to both a first instance (161) of that entity (160) and at least according to a second instance (162) of that entity (160), wherein the entity (160) is susceptible to be copied and then to exist in the form of the first instance (161) and the at least second instance (162), wherein the at least second instance (162) corresponds to a software-based copy, wherein the copy is able to use a different configuration or provide a different feature set, wherein having a software-based copy applies to any element of the entity (160), wherein the entity (160) has or is assigned to an entity identifier information (150), wherein the entity identifier information (150) is a network identifier information,
wherein the first instance (161) and the at least second instance (162) of the entity (160) uses the same entity identifier information (150),
wherein a first entity instance identifier information (171) is assigned or associated to the first instance (161) of the entity (160), and wherein a second entity instance identifier information (172) is assigned or associated to the second instance (162) of the entity (160),
wherein the telecommunications network (100) is connected to the at least one further entity, said further entity being a user equipment, wherein the at least one further entity accesses one specific instance (160') of the plurality of the first and the at least second instances (161, 162) of the entity (160), the one specific instance (160') having a specific entity instance identifier information (170') out of the plurality of the first and the at least second entity instance identifier information,
wherein, in order for the further entity accessing or addressing the one specific instance (160') of the entity (160), the system is configured such that:
-- the further entity transmits or directs a first message to an intermediate network node of the telecommunications network (100), using at least the entity identifier information (150) to access or to address the specific instance (160') of the entity (160), wherein the specific network entity identifier information (170') of the specific instance (160') is or has been determined, wherein the first message, transmitted or directed, by the further entity, to the intermediate network node comprises both the entity identifier information (150) and the specific entity instance identifier information (170') of the specific instance (160'),
-- by means of a second message, and using the specific entity instance identifier information (170'), the specific instance (160') of the entity (160) is accessed or addressed.

5. Program comprising a computer readable program code which, when executed in a system according to claim 4, causes the system to perform a method according one of claims 1 to 3.

6. Computer-readable medium comprising instructions which when executed in a system according to claim 4, causes the system to perform a method according one of claims 1 to 3.

## Patentansprüche

1. Verfahren zur Nutzung eines Telekommunikationsnetzes (100), wobei das Telekommunikationsnetz (100) als Ganzes eine Entität (160) ist, die sowohl gemäß einer ersten Instanz (161) dieser Entität (160) als auch mindestens gemäß einer zweiten Instanz (162) dieser Entität (160) realisiert oder implementiert ist,
wobei die Entität (160) dazu geeignet ist, kopiert zu werden und sodann in Form der ersten Instanz (161) und der mindestens zweiten Instanz (162) zu existieren,
wobei die mindestens zweite Instanz (162) einer softwarebasierte Kopie entspricht,
wobei die Kopie eine andere Konfiguration verwenden oder einen anderen Funktionsumfang bereitstellen kann,
wobei das Vorhandensein einer softwarebasierte Kopie für jedes Element der Entität (160) gilt,
wobei die Entität (160) eine Entitätskenninformation (150) hat oder ihr eine solche zugewiesen ist,
wobei die Entitätskenninformation (150) eine Netzkenninformation ist,
wobei die erste Instanz (161) und die mindestens zweite Instanz (162) der Entität (160) dieselbe Entitätskenninformation (150) verwenden,
wobei der ersten Instanz (161) der Entität (160) eine erste Entitätsinstanz-Kenninformation (171) zugewiesen oder zugeordnet ist und wobei der zweiten Instanz (162) der Entität (160) eine zweite Entitätsinstanz-Kenninformation (172) zugewiesen oder zugeordnet ist,
wobei das Telekommunikationsnetz (100) mit mindestens einer weiteren Entität verbunden ist, wobei es sich bei der weiteren Entität um ein Benutzergerät handelt, wobei die mindestens eine weitere Entität auf eine spezifische Instanz (160') der Gesamtheit der ersten und der mindestens zweiten Instanzen (161, 162) der Entität (160) zugreift,
wobei die spezifische Instanz (160') eine spezifische Entitätsinstanz-Kenninformation (170') aus der Gesamtheit der ersten und der mindestens zweiten Entitätsinstanz-Kenninformationen aufweist,
wobei, damit die weitere Entität auf die spezifische Instanz (160') der Entität (160) zugreifen oder diese adressieren kann, das Verfahren die folgenden Schritte umfasst:
- in einem ersten Schritt sendet oder richtet die weitere Entität eine erste Nachricht an einen zwischengeschalteten Netzknoten des Telekommunikationsnetzes (100), wobei mindestens die Entitätskenninformation (150) verwendet wird, um auf die spezifische Instanz (160') der Entität (160) zuzugreifen oder diese zu adressieren, wobei die spezifische Entitätsinstanz-Kenninformation (170') der spezifischen Instanz (160') bestimmt worden ist oder wird,
- wobei die von der weiteren Entität an den zwischengeschalteten Netzknoten gesendete oder gerichtete erste Nachricht sowohl die Entitätskenninformation (150) als auch die spezifische Entitätsinstanz-Kenninformation (170') der spezifischen Instanz (160') enthält,
- in einem zweiten Schritt wird mittels einer zweite Nachricht und unter Verwendung der spezifische Entitätsinstanz-Kenninformation (170') auf die spezifische Instanz (160') der Entität (160) zugegriffen oder diese adressiert.

2. Verfahren nach Anspruch 1, wobei mindestens eine der Instanzen (161, 162) der Entität (160) als virtualisierte Entität (160) realisiert ist,
wobei die erste Instanz (161) der Entität (160) eine physische Implementierung der Entität (160) ist und die zweite Instanz (162) der Entität (160) eine virtuelle Implementierung der Entität (160) ist,
oder
wobei die erste Instanz (161) der Entität (160) eine virtuelle Implementierung der Entität (160) ist, insbesondere in einer ersten virtuellen Umgebung (301) oder Cloud-Infrastruktur, und die zweite Instanz (162) der Entität (160) eine virtuelle Implementierung der Entität (160) ist, insbesondere in einer zweiten virtuellen Umgebung (302) oder Cloud-Infrastruktur, die von der ersten virtuelle Umgebung (301) oder Cloud-Infrastruktur verschieden ist.

3. Verfahren nach einem der vorangegangenen Ansprüche, wobei die erste Entitätsinstanz-Kenninformation (171) und/oder die mindestens zweite Entitätsinstanz-Kenninformation (172) eine der folgenden ist:
- eine Angabe einer Zahl oder eines Booleschen Wertes, "wahr"/"falsch", insbesondere ob die adressierte Instanz einer physischen Instanz oder einer virtuellen Instanz oder einer Kopie davon entspricht,
- als spezifizierte Kenninformation, beispielsweise auf Basis eines vollqualifizierten Domänennamens,
- als zentral verwaltete Kennung innerhalb des Telekommunikationsnetzes (100),
- eine Kenninformation, die sich auf den Hosting-Standort der jeweiligen Instanz bezieht, insbesondere mittels eines vollqualifizierten Domänennamen oder einer spezifizierten Zeichenkette.

4. System, umfassend ein Telekommunikationsnetz (100) und mindestens eine weitere Entität, wobei das Telekommunikationsnetz (100) als Ganzes eine Entität (160) ist, die sowohl gemäß einer ersten Instanz (161) dieser Entität (160) als auch mindestens gemäß einer zweiten Instanz (162) dieser Entität (160) realisiert oder implementiert ist,
wobei die Entität (160) dazu geeignet ist, kopiert zu werden und sodann in Form der ersten Instanz (161) und der mindestens zweiten Instanz (162) zu existieren,
wobei die mindestens zweite Instanz (162) einer softwarebasierte Kopie entspricht,
wobei die Kopie eine andere Konfiguration verwenden oder einen anderen Funktionsumfang bereitstellen kann,
wobei das Vorhandensein einer softwarebasierte Kopie für jedes Element der Entität (160) gilt,
wobei die Entität (160) eine Entitätskenninformation (150) hat oder ihr eine solche zugewiesen ist,
wobei die Entitätskenninformation (150) eine Netzkenninformation ist,
wobei die erste Instanz (161) und die mindestens zweite Instanz (162) der Entität (160) dieselbe Entitätskenninformation (150) verwenden,
wobei der ersten Instanz (161) der Entität (160) eine erste Entitätsinstanz-Kenninformation (171) zugewiesen oder zugeordnet ist und wobei der zweiten Instanz (162) der Entität (160) eine zweite Entitätsinstanz-Kenninformation (172) zugewiesen oder zugeordnet ist,
wobei das Telekommunikationsnetz (100) mit der mindestens einen weiteren Entität verbunden ist, wobei es sich bei der weiteren Entität um ein Benutzergerät handelt, wobei die mindestens eine weitere Entität auf eine spezifische Instanz (160') der Gesamtheit der ersten und der mindestens zweiten Instanzen (161, 162) der Entität (160) zugreift,
wobei die spezifische Instanz (160') eine spezifische Entitätsinstanz-Kenninformation (170') aus der Gesamtheit der ersten und der mindestens zweiten Entitätsinstanz-Kenninformationen aufweist,
wobei, damit die weitere Entität auf die spezifische Instanz (160') der Entität (160) zugreifen oder diese adressieren kann, das System derart konfiguriert ist, dass:
- die weitere Entität eine erste Nachricht an einen zwischengeschalteten Netzknoten des Telekommunikationsnetzes (100) sendet oder richtet, wobei mindestens die Entitätskenninformation (150) verwendet wird, um auf die spezifische Instanz (160') der Entität (160) zuzugreifen oder diese zu adressieren, wobei die spezifische Entitätsinstanz-Kenninformation (170') der spezifischen Instanz (160') bestimmt worden ist oder wird,
- wobei die von der weiteren Entität an den zwischengeschalteten Netzknoten gesendete oder gerichtete erste Nachricht sowohl die Entitätskenninformation (150) als auch die spezifische Entitätsinstanz-Kenninformation (170') der spezifischen Instanz (160') enthält,
- mittels einer zweite Nachricht und unter Verwendung der spezifische Entitätsinstanz-Kenninformation (170') wird auf die spezifische Instanz (160') der Entität (160) zugegriffen oder diese adressiert.

5. Programm, umfassend einen computerlesbaren Programmcode, der, wenn er in einem System nach Anspruch 4 ausgeführt wird, das System veranlasst, ein Verfahren nach einem der Ansprüche 1 bis 3 durchzuführen.

6. Computerlesbares Medium, das Anweisungen umfasst, die, wenn sie in einem System nach Anspruch 4 ausgeführt werden, das System veranlassen, ein Verfahren nach einem der Ansprüche 1 bis 3 durchzuführen.

## Revendications

1. Procédé d'utilisation d'un réseau de télécommunications (100), dans lequel le réseau de télécommunications (100) dans son ensemble est une entité (160) qui est réalisée ou implémentée à la fois selon une première instance (161) de cette entité (160) et au moins selon une deuxième instance (162) de cette entité (160),
dans lequel l'entité (160) est susceptible d'être copiée et d'exister ensuite sous la forme de la première instance (161) et de la au moins deuxième instance (162),
dans lequel la au moins deuxième instance (162) correspond à une copie logicielle,
dans lequel la copie est en mesure d'utiliser une configuration différente ou de fournir un ensemble de fonctionnalités différent,
dans lequel le fait de disposer d'une copie logicielle s'applique à tout élément de l'entité (160),
dans lequel l'entité (160) possède ou se voit attribuer une information d'identification d'entité (150),
dans lequel l'information d'identification d'entité (150) est une information d'identification de réseau,
dans lequel la première instance (161) et la au moins deuxième instance (162) de l'entité (160) utilisent la même information d'identification d'entité (150),
dans lequel une première information d'identification d'instance d'entité (171) est attribuée ou associée à la première instance (161) de l'entité (160), et dans lequel une deuxième information d'identification d'instance d'entité (172) est attribuée ou associée à la deuxième instance (162) de l'entité (160),
dans lequel le réseau de télécommunications (100) est connecté à au moins une autre entité, ladite autre entité étant un équipement utilisateur, dans lequel ladite au moins une autre entité accède à une instance spécifique (160') parmi la pluralité des premières et au moins deuxièmes instances (161, 162) de l'entité (160),
dans lequel l'instance spécifique (160') possède une information d'identification d'instance d'entité spécifique (170') parmi la pluralité des premières et au moins deuxièmes information d'identification d'instance d'entités,
dans lequel, afin que l'autre entité accède ou s'adresse à l'instance spécifique (160') de l'entité (160), le procédé comprend les étapes suivantes :
- dans une première étape, l'autre entité transmet ou dirige un premier message vers un nœud de réseau intermédiaire du réseau de télécommunications (100), en utilisant au moins l'information d'identification d'entité (150) pour accéder à l'instance spécifique (160') de l'entité (160) ou pour s'y adresser, dans lequel l'information d'identification d'instance d'entité spécifique (170') de l'instance spécifique (160') est ou a été déterminée,
- dans lequel le premier message transmis ou dirigé par l'autre entité vers le nœud de réseau intermédiaire comprend à la fois l'information d'identification d'entité (150) et l'information d'identification d'instance d'entité spécifique (170') de l'instance spécifique (160'),
- dans une deuxième étape, au moyen d'un deuxième message et en utilisant l'information d'identification d'instance d'entité spécifique (170'), l'instance spécifique (160') de l'entité (160) est accédée ou adressée.

2. Procédé selon la revendication 1, dans lequel au moins une des instances (161, 162) de l'entité (160) est réalisée en tant qu'entité virtualisée (160),
dans lequel la première instance (161) de l'entité (160) est une implémentation physique de l'entité (160) et la deuxième instance (162) de l'entité (160) est une implémentation virtuelle de l'entité (160),
ou
dans lequel la première instance (161) de l'entité (160) est une implémentation virtuelle de l'entité (160), notamment dans un premier environnement virtuel (301) ou une infrastructure en nuage, et la deuxième instance (162) de l'entité (160) est une implémentation virtuelle de l'entité (160), notamment dans un deuxième environnement virtuel (302) ou une infrastructure en nuage, différent du premier environnement virtuel (301) ou de l'infrastructure en nuage.

3. Procédé selon l'une des revendications précédentes, dans lequel la première information d'identification d'instance d'entité (171) et/ou la au moins deuxième information d'identification d'instance d'entité (172) est l'une des suivantes :
- une indication d'un nombre ou d'une valeur booléenne, vrai/faux, notamment si l'instance adressée correspond à une instance physique, ou à une instance virtuelle ou à une copie de celle-ci,
- sous forme d'information d'identification spécifiée, par exemple basée sur un nom de domaine entièrement qualifié,
- sous forme d'identifiant géré centralement au sein du réseau de télécommunications (100),
- une information d'identification relative à l'emplacement d'hébergement de l'instance respective, notamment au moyen d'un nom de domaine entièrement qualifié ou d'une chaîne de caractères spécifiée.

4. Système comprenant un réseau de télécommunications (100) et au moins une autre entité, dans lequel le réseau de télécommunications (100) dans son ensemble est une entité (160) qui est réalisée ou implémentée à la fois selon une première instance (161) de cette entité (160) et au moins selon une deuxième instance (162) de cette entité (160),
dans lequel l'entité (160) est susceptible d'être copiée et d'exister ensuite sous la forme de la première instance (161) et de la au moins deuxième instance (162),
dans lequel la au moins deuxième instance (162) correspond à une copie logicielle,
dans lequel la copie est en mesure d'utiliser une configuration différente ou de fournir un ensemble de fonctionnalités différent,
dans lequel le fait de disposer d'une copie logicielle s'applique à tout élément de l'entité (160),
dans lequel l'entité (160) possède ou se voit attribuer une information d'identification d'entité (150),
dans lequel l'information d'identification d'entité (150) est une information d'identification de réseau,
dans lequel la première instance (161) et la au moins deuxième instance (162) de l'entité (160) utilisent la même information d'identification d'entité (150),
dans lequel une première information d'identification d'instance d'entité (171) est attribuée ou associée à la première instance (161) de l'entité (160), et dans lequel une deuxième information d'identification d'instance d'entité (172) est attribuée ou associée à la deuxième instance (162) de l'entité (160),
dans lequel le réseau de télécommunications (100) est connecté à ladite au moins une autre entité, ladite autre entité étant un équipement utilisateur, dans lequel ladite au moins une autre entité accède à une instance spécifique (160') parmi la pluralité des premières et au moins deuxièmes instances (161, 162) de l'entité (160),
dans lequel l'instance spécifique (160') possède une information d'identification d'instance d'entité spécifique (170') parmi la pluralité des premières et au moins deuxièmes information d'identification d'instance d'entités,
dans lequel, afin que l'autre entité accède ou s'adresse à l'instance spécifique (160') de l'entité (160), le système est configuré de telle sorte que :
- l'autre entité transmet ou dirige un premier message vers un nœud de réseau intermédiaire du réseau de télécommunications (100), en utilisant au moins l'information d'identification d'entité (150) pour accéder à l'instance spécifique (160') de l'entité (160) ou pour s'y adresser, dans lequel l'information d'identification d'instance d'entité spécifique (170') de l'instance spécifique (160') est ou a été déterminée,
- dans lequel le premier message transmis ou dirigé par l'autre entité vers le nœud de réseau intermédiaire comprend à la fois l'information d'identification d'entité (150) et l'information d'identification d'instance d'entité spécifique (170') de l'instance spécifique (160'),
- au moyen d'un deuxième message et en utilisant l'information d'identification d'instance d'entité spécifique (170'), l'instance spécifique (160') de l'entité (160) est accédée ou adressée.

5. Programme comprenant un code de programme lisible par ordinateur qui, lorsqu'il est exécuté dans un système selon la revendication 4, amène le système à exécuter un procédé selon l'une des revendications 1 à 3.

6. Support lisible par ordinateur comprenant des instructions qui, lorsqu'elles sont exécutées dans un système selon la revendication 4, amènent le système à exécuter un procédé selon l'une des revendications 1 à 3.
